# EUROPEAN PATENT SPECIFICATION

(11) **EP 1 994 064 B1**
(45) Date of publication and mention of the grant of the patent: **01.09.2010**
(21) Application number: 07752268.8
(22) Date of filing: 02.03.2007
(51) Int. Cl.: C08F 255/00, C08F 255/02, C08J 5/04, C08L 23/04, C08L 1/02, C08L 97/02, C08L 51/06, D06M 15/227, D06M 15/263, C08F 8/46

(54) **COUPLING AGENTS FOR NATURAL FIBER-FILLED POLYOLEFINS AND COMPOSITIONS THEREOF**
KOPPLUNGSMITTEL FÜR MIT NATÜRLICHEN FASERN GEFÜLLTEN POLYOLEFINEN UND ZUSAMMENSETZUNGEN DARAUS
AGENTS DE COUPLAGE POUR POLYOLÉFINES À RENFORT DE FIBRES NATURELLES ET LEURS COMPOSITIONS

(30) Priority: 03.03.2006 US 779396 P; 01.03.2007 US 713134
(43) Date of publication of application: 26.11.2008
(73) Proprietor: CHEMTURA CORPORATION, Middlebury, CT 06749 (US)
(72) Inventor: SIGWORTH, William, D., Naugatuck, CT 06770 (US); WEFER, John, M., Newtown, CT 06470 (US)
(74) Representative: Serravalle, Marco
(86) International application number: PCT/US2007/005554
(87) International publication number: WO 2007/130201

(56) References cited:
- WO-A-02/18463
- WO-A-90/01504
- US-A1- 2005 154 143
- US-A1- 2005 187 315
- DATABASE CAPLUS [Online] CHEMICAL ABSTRACTS SERVICE, COLUMBUS, OHIO, US; 6 January 2006 (2006-01-06), YAMAGUCHI, TATSUO ET AL: "Polyolefin compositions contg. plant-derived fillers with good mechanical strength and water resistance, and their moldings" XP002442086 retrieved from STN Database accession no. 2006:11089 -& JP 2006 002052 A (MITSUBISHI CHEMICAL CORP., JAPAN) 5 January 2006 (2006-01-05)

## Description

### BACKGROUND OF THE INVENTION

### 1. Field of the Invention

The invention relates to polyolefin composites comprising natural fibers. More particularly, the present invention relates to natural fiber-filled polyolefin composites having increased strength resulting from the inclusion of low levels functionalized polyolefin coupling agent.

### 2. Description of Related Art

A well-known problem in the formation of composite materials prepared from plastics and natural fibers is the incompatibility of the fiber with the plastic. Natural fibers are hydrophilic, with many free polar hydroxyl groups on the surface. Plastics are hydrophobic. Therefore, the plastics do not readily wet the surface of the natural fiber and adhere thereto. This fact causes a loss in the strength and an increase in the water uptake of the resulting composite material.

This problem can be overcome by the addition of coupling agents to the composite material. Coupling agents are thought to function by the reaction of a reactive anhydride or acid moiety with hydroxyl groups on the surface of the fiber to form an ester linkage. The hydrophobic polymer chains extend outward from the fiber surface, where they can interact with the bulk of the polymer matrix. The exact nature of the interaction will depend upon the choice of coupling agent and polymer and the extent of crystallinity of the polymer. The coupling agent generally serves as a transitional bridge that improves the adhesion of the plastic to the natural fiber surface. It is well-known that coupling agents improve the performance of natural fiber-filled polyolefins. Tensile, flexural, and impact strengths as well as heat deflection temperature are increased. Creep, linear coefficient of thermal expansion (LCTE), and water absorption are reduced.

Polyolefins containing polar or reactive groups, useful as coupling agents, can be made by grafting polar monomers, such as maleic anhydride, onto the polyolefin. Various grafting techniques are well known to those skilled in the art, including solution grafting using peroxide initiation, solid-state grafting using peroxide or radiation initiation, and reactive extrusion in a twin-screw extruder, usually using peroxide initiation. Alternatively, polyolefins containing polar or reactive groups, useful as coupling agents, can be made by copolymerizing at least one olefin monomer with at least one polar monomer, for example, maleic anhydride.

Preparing composites comprising thermoplastic resinous matrix materials having dispersed therein organic reinforcing fillers, such as cellulosic or lignocellulosic fibers, is known in the art. It is also known in the art to improve the mechanical properties of such composites by treating such fibers with coupling agents prior to their introduction into the thermoplastic resinous matrix material. The following articles are among many that make reference to known technology:
P. Jacoby et al., "Wood Filled High Crystallinity Polypropylene," WOOD-PLASTIC CONFERENCE SPONSORED BY PLASTICS TECHNOLOGY, Baltimore, Md., December 5-6, 2000;
M. Wolcott et al., "Coupling Agent/Lubricant Interactions in Commercial Wood Plastic Formulations," 6TH INTERNATIONAL CONFERENCE ON WOODFIBER-PLASTIC COMPOSITES, Madison, Wis., May 15-16,2001;
W. Sigworth, "The Use of Functionalized Polyolefins in Environmentally Friendly Plastic Composites," GPEC 2002, February 13-14, 2002, Detroit, Mich.;
J. Wefer and W. Sigworth, "The Use of Functionalized Coupling Agents in Wood-filled Polyolefins," WOOD-PLASTIC COMPOSITES, A SUSTAINABLE FUTURE CONFERENCE, May 14-16,2002, Vienna, Austria;
R. Heath, "The Use of Additives to Enhance the Properties and Processing of Wood Polymer Composites," PROGRESS IN WOODFIBRE-PLASTIC COMPOSITES CONFERENCE 2002, May 23-24, 2002, Toronto, Canada; and
W. Sigworth, "Additives for Wood Fiber Polyolefins: Coupling Agents," PROGRESS IN WOODFIBRE-PLASTIC COMPOSITES CONFERENCE 2002, May 23-24, 2002, Toronto, Canada.
Additionally, Kokta, B.V. et al., 28(3) POLYM.-PLAST. TECHNOL. ENG. 247-59 (1989) studied the mechanical properties of polypropylene with wood flour. The wood flour was pretreated with polymethylene polyphenylisocyanate and silane coupling agents before adding it to the polymer.
Raj, R.G. et al., 29(4) POLYM.-PLAST. TECHNO. ENG. 339-53 (1990) filled high density polyethylene with three different cellulosic fibers that had been pretreated with a silane coupling agent/polyisocyanate to improve the adhesion between the fibers and the polymer matrix.
Matuana, L.M. et al., ANTEC 3:3313-18 (1998) studied the effect of the surface acid-base properties of plasticized PVC and cellulosic fibers on the mechanical properties of the plastic/cellulosic composite. They modified the surface of the fibers with γ-aminopropyltriethoxysilane, dichlorodiethylsilane, phthalic anhydride, and maleated polypropylene.
U.S. Patent No. 4,717,742 discloses resin composites reinforced with silanes grafted onto organic fillers that are said to have improved durability, even at sub-zero degrees or at high temperatures, improved physical properties and can be prepared by a process, in which the organic filler is grafted with a silane coupling agent in maleated polymer matrix.
US 2005/0187315 discloses a composite composition comprising cellulose material in a polymeric matrix comprising a thermoplastic polymer, and at least one compatibilizing copolymer prepared from an olefin and a functional comonomer, and articles prepared from such composites.
WO 90/01504 relates to a process of grafting maleic anhydride to polymers using a multiple screw extruder. The obtained graft polymer has a yellowness index lower than 10.0
U.S. Patent No. 4,820,749 discloses a composite material based on a polymeric or copolymeric substance which may be a thermoplastic or thermosetting material or rubber, and an organic material which is cellulosic or starch. The cellulosic material is grafted with a silylating agent. Processes for preparing this composite are also disclosed.
U.S. Patent No. 6,265,037 discloses an improved composite structural member comprising a complex profile structural member, made of a composite comprising a polypropylene polymer and a wood fiber. The material is said to be useful in conventional construction applications.
U.S. Patent No. 6,300,415 discloses a polypropylene composition for the production of various molded articles which are said to be excellent in moldability, mold shrinkage factor on molding, rigidity, flexibility, impact resistance, in particular low-temperature impact resistance, transparency, gloss, stress-whitening resistance, and the balance thereof; various molded articles having the above properties; a propylene composition which is suitable for a base resin for the polypropylene composition; and a process for the production thereof. The propylene composition comprises a propylene homopolymer and a propyleneethylene copolymer.

An object of the invention is to increase the coupling efficiency of coupling agents. An increased coupling efficiency reduces the amount and expense of a coupling agent while permitting comparable or better coupling.

### SUMMARY OF THE INVENTION

Functionalized polyolefins that are characterized by having both a high maleic anhydride content and a high molecular weight are more effective in improving the mechanical strength properties, creep resistance, and water absorption resistance of natural fiber-filled polyolefin composites than are more conventional polyolefins that are lower in functionality and/or molecular weight. Further, by the present invention, the coupling efficiency of maleic anhydride functionalized polyolefin in a cellulosic-polyolefin composite can be increased at lower levels of maleic anhydride functionality by adjustment of the reaction conditions during the functionalization reaction.

The invention is desirably a coupling agent, which is made from a polyolefin composition and is for wetting a cellulosic fiber. The coupling agent desirably includes a polyolefin resin having a melt flow index at 190°C and 2.16 kg of 0.1 to 500 (g/10 min). The polyolefin resin is desirably combined with 1.6 to 4.0 weight percent maleic anhydride, and the composition desirably has less than 1,500 ppm of free maleic anhydride. The coupling agent desirably has a yellowness index of 20 to 70.

A cellulosic composite is desirably made from the coupling agent by combining the coupling agent with cellulosic fiber and at least one thermoplastic polymer. The cellulosic composite desirably includes 10 to 90 percent cellulosic fiber, a first polyolefin resin having a melt flow index of 0.1 to 100 (g/10 min), and 0.1 to 10 weight percent of a coupling agent.

The composite of the present invention is useful for marine decking, deck supports, railing systems, automotive parts, and similar applications where additional structural strength is needed. The invention also provides composites with improved durability by reducing water absorption and increasing creep resistance.

### DESCRIPTION OF THE PREFERRED EMBODIMENTS

It is often desirable to increase the strength properties of natural fiber-filled polyolefin composites, e.g., wood-polyolefin composites, for construction and automotive applications. It is known that maleated polyolefins improve dispersion of the natural fiber in the polyolefin and increase interfacial adhesion between the fiber and resin. These improvements lead to increased strength properties.

Coupling agents generally increase the raw material costs of the cellulosic-thermoplastic composite as they are more expensive than the cellulosic particulate and the thermoplastic resin. Therefore, it is desirable to improve the coupling efficiency of these coupling agents. Coupling efficiency can be defined as the increase in property provided by the addition of set amount of the coupling agent relative to the same formulation that does not contain coupling agent. The following example is included to demonstrate the principle of increased coupling efficiency.

If the addition of 2% of coupling agent A increases the flexural strength by 20% versus a control compound with no coupling agent while 2% of coupling agent B increases the flexural strength by 50%, then coupling agent B would be considered to be a more efficient coupler than coupling agent A. Another way to view increased efficiency is that a lower level of coupling agent B would be required to give the same property improvement obtained with 2% of coupling agent A. Therefore, coupling agent B would be less expensive to than coupling agent A assuming that both materials were similarly priced. It is generally believed that increasing the level of functionality in a coupling agent greater than 4% increases coupling efficiency.

The invention is desirably a coupling agent, which is made from a polyolefin composition and is for wetting a cellulosic fiber. The coupling agent desirably includes a polyolefin resin having a melt flow index at 190°C and 2.16 kg of 0.5 to 100 (g/10 min), more preferably of 5 to 50 (g/10 min), and most preferably 10 to 30 (g/10 min). The polyolefin resin is reacted with 1.6 to 4.0 weight percent maleic anhydride, preferably with 1.6 to 3.0 weight percent maleic anhydride, and most preferably 2.0 to 3.0 weight percent maleic anhydride. The composition has less than 1,500 ppm of free maleic anhydride, preferably less than 600ppm of free maleic anhydride, and most preferably less than 200 ppm of free maleic anhydride. The coupling agent has a yellowness index of 20 to 70, preferably of 20 to 55, and most preferably of 20 to 40.

More preferably, the coupling agent includes a polyolefin resin having a melt flow index at 190°C and 2.16 kg of 5 to 50 (g/10 min). The polyolefin resin is desirably combined with 1.6 to 3.0 weight percent maleic anhydride. The composition desirably has less than 600ppm of free maleic anhydride. The coupling agent desirably has a yellowness index of 20 to 55.

Most preferably, the coupling agent includes a polyolefin resin, preferably high-density polyethylene homopolymers and copolymers, having a melt flow index at 190°C and 2.16 kg of 10 to 30 (g/10 min). The polyolefin resin is desirably combined with 2.0 to 3.0 weight percent maleic anhydride. The composition desirably has less than 200 ppm of free maleic anhydride. The coupling agent desirably has a yellowness index of 20 to 40.

The melt flow index values for the maleic anhydride functionalized coupling agent are 0.1 to 500 (g/10 min), more preferred is 0.5 to 100 (g/10 min), and most preferred is 2 to 50 (g/10 min).

A cellulosic composite is desirably made from the coupling agent by combining the coupling agent with cellulosic fiber and at least one thermoplastic polymer. The cellulosic composite includes 10 to 90 weight percent cellulosic fiber, a first polyolefin resin having a melt flow index of 0.1 to 100 (g/10 min), and 0.1 to 10 weight percent of a coupling agent. More preferably, the cellulosic composite includes 20 to 80 weight percent cellulosic fiber, a first polyolefin resin having a melt flow index of 0.3 to 20 (g/10 min), and 0.5 to 3.0 weight 20percent of a coupling agent.

Most preferably, the cellulosic composite is made from the coupling agent by combining the coupling agent with cellulosic fiber selected from the group comprising wood flour, wood fiber, or combinations thereof, and at least one thermoplastic polymer, preferably high-density polyethylene homopolymers and copolymers. The cellulosic composite includes 40 to 65 weight percent cellulosic fiber, a first polyolefin resin having a melt flow index of 0.3 to 5 (g/10 min), and 0.5 to 2.0 weight percent of a coupling agent.

The term "natural fiber" means a fiber obtained directly or indirectly from a source in nature. Included within the term, but not limited thereto are wood flour, wood fiber, and agricultural fibers such as wheat straw, alfalfa, wheat pulp, cotton, corn stalks, corn cobs, rice hulls, rice bulbs, nut shells, sugar cane bagasse, bamboo, palm fiber, hemp, flax, kenaf, plant fibers, vegetable fibers, rayon, grasses, wood pulp fiber, rice, rice fiber, esparto, esparto fiber, bast fiber, jute, jute fiber, flax fiber, cannabis, cannabis fiber, linen, linen fiber, ramie, ramie fiber, leaf fibers, abaca, abaca fiber, sisal, sisal fiber, chemical pulp, cotton fibers, grass fibers, oat, oat chaff, barley, barley chaff, grain seeds in the flour and cracked states, tubers, potatoes, roots, tapioca, tapioca root, cassava, cassava root, manioc, manioc root, sweet potato, arrowroot, sago palm pith, stems, husks, shells, fruits, recycled paper fiber, recycled boxes, recycled box fiber, recycled newspaper, recycled newspaper fiber, recycled computer printout, recycled computer printout fiber, milling tailings, hardwood fiber, softwood fiber, newsprint, magazines, books, cardboard, wheat chaff, bamboo fiber, pond sludge, cork, and the like, and combinations thereof. Preferably, the cellulosic particulate material is selected from the group consisting of wood fiber, wood flour, and combinations thereof. Wood fiber, in terms of abundance and suitability, can be derived from either softwoods or evergreens or from hardwoods commonly known as broadleaf deciduous trees.

The polyolefins employed in this invention are typically polymerized from ethylene, copolymers of ethylene and other alpha olefins such as propylene, butene, hexene, and octene, copolymers of polyethylene and vinyl acetate, and combinations thereof. Preferably, where ethylene is used, it can be, for example, high density polyethylene (HDPE), low density polyethylene (LDPE), or linear low density polyethylene (LLDPE), and combinations thereof. More preferably, polyolefins are high density homopolymer polyethylene and high density copolymers of ethylene with butene, hexene, octene, and combinations thereof.

The functionalized polyolefin, which is preferably a functionalized polyethylene or polypropylene, is one that contains reactive groups that can react with the functional groups on the surface of the natural fiber. Such polymers are modified by a reactive group including at least one polar monomer selected from the group consisting of ethylenically unsaturated carboxylic acids or ethylenically unsaturated carboxylic acid anhydrides. Mixtures of the acids and anhydrides, as well as their derivatives, can also be used. Examples of the acids include maleic acid, fumaric acid, itaconic acid, crotonic acid, acrylic acid, methacrylic acid, maleic anhydride, itaconic anhydride, and substituted maleic anhydrides. Maleic anhydride is preferred. Derivatives that can also be used include salts, amides, imides, and esters. Examples of these include glycidyl methacrylate, mono- and disodium maleate, and acrylamide. Virtually any olefinically reactive residue that can provide a reactive functional group on a modified polyolefin polymer can be useful in the invention.

Functionalized polyolefin coupling agents are prepared by a melt-state process called reactive extrusion. This mechanism is well established and has been described by DeRoover et al., in the JOURNAL OF POLYMER SCIENCE, PART A: POLYMER. A functionalized monomer and a free radical initiator are added to a twin screw extruder and subjected to elevated temperatures. During this process, a hydrogen atom is abstracted from the polymer chain by the initiator. The functional monomer then reacts at the site of the free radical resulting in the formation of functional site on the polymer chain. Since higher molecular weight polymer chains are statistically more likely to react with the free radicals, narrowing the molecular weight distribution of the polymer is characteristic of reactive extrusion processes.

Although not intended to limit the scope of the present invention, functional polyolefin coupling agents of the present invention can be prepared by solution or solid-state processes. Such processes are well known to those skilled in the art and are described, for example, in U.S. Patent Nos. 3,414,551 and 5,079,302 to G. Ruggeri et al., 19 EUROPEAN POLYMER JOURNAL 863 (1983) and Y. Minoura et al., 13 JOURNAL OF APPLIED POLYMER SCIENCE 1625 (1969).

These processes favor a reaction of the functional monomer with the free radical site on the polymer before the polymer can undergo chain scission. The end result is then to have functional monomer along the polymer chain instead of just at the ends. In addition, the narrowing of the molecular weight distribution of the polymer noted in reactive extrusion processes does not take place during solution or solid-state functionalization processes.

Optionally, the composites of the present invention can contain other additives. These additives can be lubricants which do not interfere with the coupling agent.

Inorganic particulates can be included to impart lubrication and to improve mechanical properties. Examples include talc, calcium carbonate, clay, mica, pumice, and other materials.

The composition can contain at least one additional component. Examples of suitable additional components include, but are not limited to, an antioxidant, a foaming agent, a dye, a pigment, a cross-linking agent, an inhibitor, and/or an accelerator. At least one further conventional additive can be used, such as compatibilizers, enhancers, mold-releasing agents, coating materials, humectants, plasticizers, sealing materials, thickening agents, diluting agents, binders, and/or any other commercially available or conventional components.

Antioxidants are added to prevent degradation of polymer during processing. An example is Chemtura Corporation's Naugard B25 (a mixture of tris (2,4-di-tert-butyl phenyl) phosphite and tetrakis methylene (3,5-di-tert-butyl-4-hydroxyhydrocinnamate) methane). A foaming agent is added to decrease density of the cellulosic-thermoplastic composite by foaming. Examples of foaming agents include Chemtura Corporation's Celogen TSH (toluene sulfonyl hydrazide), Celogen AZ (azodicarbonamide), Celogen OT (*p-p*'-oxybis(benzenesulfhnylhydrazide)), Celogen RA (*p*-toluene sulfonyl semicarbazide), Opex 80 (dinitrosopentamethylenetetramine), and Expandex 5-PT (5-phenyltetrazole).

Colorants are pigments or dyes. Dyes are commonly organic compounds that are soluble in plastic, forming a neutral molecular solution. They produce bright intense colors and are transparent. Pigments are generally insoluble in plastic. The color results from the dispersion of fine particles (in the range of about 0.01 to about 1 µm) throughout thermoplastic. They produce opacity or at least some translucence in the cellulosic-thermoplastic composite. Pigments can be organic or inorganic compounds and are viable in a variety of forms including dry powders, color concentrates, liquids, and precolor resin pellets. Most common inorganic pigments include oxides, sulfides, chromates, and other complexes based on a heavy metal such as cadmium, zinc, titanium, lead, molybdenum, iron, combinations thereof, and others. Ultramarines are typically sulfide-silicate complexes containing sodium and aluminum. Often pigments comprise mixtures of two, three or more oxides of iron, barium, titanium, antimony, nickel, chromium, lead, and others in known ratios. Titanium dioxide is a widely used and known bright white thermally stable inorganic pigment. Other known organic pigments include azo or diazo pigments, pyrazolone pigments, permanent red 2B, nickel azo yellow, litho red, and pigment scarlet.

Cross-linking agents can optionally be added to strengthen the bond between cellulosic particulate, as described above, into a final homogenous product. Cross-linking agent bonds across the pendent hydroxyl groups on the cellulose molecular chain. Cross-linking agents must have the characteristics of forming a strong bond at relatively low temperatures. Examples of cross-linking agents that can be used include polyurethanes such as isocyanate, phenolic resin, unsaturated polyester and epoxy resin and combinations thereof. Phenolic resin may be any single stage or two-stage resin, preferably with a low hexane content.

Inhibitors can be added to retard the speed of the cross-linking reaction. Examples of known inhibitors include organic acids, such as citric acid.

Accelerators can be added to increase the speed of the cross-linking reaction. Examples of accelerators include amine catalysts such as Dabco BDO (Air Products), and DEH40 (Dow Chemical).

The amounts of the various components of the composition can be adjusted by those skilled in the art depending on the specific materials being used and the intended use of the material.

### EXAMPLES

The maleated polyolefin compositions, preferably polyethylene compositions, of the invention are preferably prepared by the well-known method of reactive extrusion. The preferred extruder is a co-rotating twin screw extruder equipped with a feeder to introduce polyethylene pellets at a constant rate into an open feed throat, injection sites to meter molten maleic anhydride and liquid peroxide, a vacuum system to remove unreacted maleic anhydride and peroxide decomposition products and an exit die and pelletizing system to collect the finished product.

The extruder barrel temperatures, screw RPM, and screw configuration are designed to perform the necessary functions of the process: (1) polyethylene melting, (2) mixing of injected maleic anhydride, (3) mixing of injected peroxide, (4) containment of material during the grafting reaction, (5) removal of unreacted maleic anhydride and peroxide decomposition products in the vacuum zone and (6) feeding the grafted, devolatilized product through the die and into the pelletizing system. These techniques are well known to those skilled in the art of reactive maleation of polyolefins.

The inventive and comparative coupling agents used in this study are listed in Table 1. The raw materials and other parameters specific to the process used in the current invention are given in Table 2. The screw design used to prepare these samples was one which could be devised by one skilled in the art based on the requirements described above.

Functionalized polyolefin coupling agents both within and outside the scope of the invention were synthesized. Characterization data for these coupling agents are set forth in Tables 1 and 2 below.

The maleic anhydride content of the coupling agents was determined by dissolving them in boiling toluene and titrating to a Bromothymol Blue end point using a standard 0.03N methanolic KOH solution. The KOH titrant was standardized using benzoic acid. The number of milliequivalents of KOH titrant needed to neutralize one hundred grams of coupling agent was determined. The percent of maleic anhydride in the coupling agent was then calculated assuming one mole of KOH neutralized one mole of maleic anhydride. This assumption was confirmed by titration of straight maleic anhydride under the same conditions used for testing the coupling agents.

The Melt Flow Rating of the coupling agent was determined using a Tinius Olsen Extrusion Plastometer Model MP600 following the procedures outlined in ASTM D1238.

Free maleic anhydride levels were measured by extracting a ground sample of the coupling agent in acetone for 40 minutes at room temperature. The acetone extracts were then titrated with a standardized methanolic potassium hydroxide solution to a Bromothymol Blue end point. The free maleic anhydride, the amount ofmaleic anhydride in the acetone extracts, was then calculated using the same assumptions as those used in determining the percent maleic anhydride bound to the coupling agent.

Yellowness index was measured in reflectance per ASTM E-313 using a Datacolor SF600 spectrocolorimeter or similar instrument on molded plaques of the coupling agent The plaques were prepared by pressing the coupling agent pellets in a platen press at 204°C (400°F) for 30 seconds at 30 tons pressure.

Wood-PE formulations were prepared using either 40 mesh oak wood flour or 40 mesh pine wood flour. The wood was dried in a circulating oven at 121°C for 24 hours. The resulting moisture content was less than 1%. Thermoplastic resin was either a recycled resin containing at least 80% LLDPE and 20% other polyolefin resin or BP Solvay (now INEOS) B54-60 fractional-melt high-density polyethylene flake (0.5 g/10 min Melt Flow). Naugard B-25 antioxidant, Lubrazinc W (zinc stearate) lubricant, Kemamide EBS (ethylene bis-stearamide), and Kemamide W-20 (ethylene bis-oleamide) were all used as received. Silverline 403 talc from Luzenac America was used as received.

The compression molded samples in Tables 3 through 6 were mixed in a Brabender laboratory bowl mixer heated to 170°C. The powdered ingredients were preblended by shaking in a plastic bag. The resulting mixture was fed to the mixer in three steps approximately one minute apart. Once all ingredients were added and had melted, the resulting molten mass was blended for 10 minutes at 100 rpm. The mixed samples were place into a 5' x 4 ½' x 1/8" three piece mold and pressed for three minutes at 40 tons pressure and 177°C in a Tetrahedron automated platen type press.

The extruded samples in Tables 7 and 8 were prepared using a Brabender Intelli-Torque Plasti-Corder with a counter-rotating #403 conical twin-screw configuration, and a Brabender 7150 drive unit. Zone temperatures were set at: Zone 1 (150°C), Zone 2 (160°C), Zone 3 (160°C), Zone 4 (die) (150°C). The die produces a continuous flat test specimen 1.0 inch wide and 0.080 inch thick. Data were acquired using the Brabender Measuring Extruder Basic Program with Multiple Evaluation, Version 3.2.1. Compounded formulations were fed into the extruder from a K-Tron K2VT20 volumetric feeder. Specimens were extruded at 60 rpm.

ASTM D790 test procedure was used to generate the flexural strength and flexural modulus data. Water uptake was determined by immersing a 1.0-inch by 2.0-inch strip of extrudate in tap water at room temperature and measuring the weight gain. Compression molded samples (1/8" thick) were immersed for 30 days while the extruded samples (0.07") were immersed for 24 hours.

Test formulations are presented in Tables 3, 5, and 7. Output and test data are presented in Tables 4, 6, and 8.

**Table 1**

| **Characterization of Coupling Agents** | | | | | |
|---|---|---|---|---|---|
| **Example** | **Type** | **%(wt) Maleic Anhydride** | **MFI @ 190°C, 2.16Kg** | **Free MA, ppm** | **Yellowness Index** |
| Comparative A | MA grafted HDPE | 1.5 | 4 | 115 | 15.6 |
| Comparative B | E-MA copolymer | 6.8 | 30 | Not Determined | Not Determined |
| 1 | MA grafted HDPE | 2.2 | 2.1 | Not Determined | 31 |
| 2 | MA grafted HDPE | 1.6 | 2.6 | 41 | 27 |
| 3 | MA grafted HDPE | 2.1 | 1.9 | Not Determined | 37 |
| 4 | MA grafted HDPE | 2.6 | 0.7 | Not Determined | 55 |
| 5 | MA grafted HDPE | 1.8 | 2.4 | 135 | 38 |
| Comparative 6 | MA grafted HDPE | 1.7 | 5.0 | 22 | 14.5 |
| 7 | MA grafted HDPE | 2.0 | 2.7 | Negligible | 27 |

**Table 2**

| **Grafting Conditions Used to Prepare Coupling Agents** | | | | | |
|---|---|---|---|---|---|
| **Example** | **Resin Type** | **MA Feed, kg/hr at 1000 kg resin/hr** | **Peroxide Feed, kg/hr at 1000 kg resin/hr** | **Barrel Temperatur es, Degree C** | **Extruder Screw Speed, rpm** |
| Comparative A | HDPE (20 MFI) | 15.3 | 0.585 | 177- 204 | 500 |
| Comparative B | E-MA | Commercial | Sample | | |
| 1 | HDPE (20 MFI) | 20.0 | 0.504 | 177-204 | 500 |
| 2 | HDPE (20 MFI) | 20.0 | 0.585 | 177-204 | 500 |
| 3 | HDPE (20 MFI) | 22.5 | 0.504 | 177-204 | 500 |
| 4 | HDPE (20 MFI) | 35.0 | 0.504 | 177-204 | 500 |
| 5 | HDPE (20 MFI) | 20.8 | 0.605 | 177-204 | 500 |
| Comparative 6 | HDPE (51 MFI) | 20 | 0.513 | 177- 191 | 600 |
| 7 | HDPE (51 MFI) | 24.9 | 0.673 | 177- 191 | 600 |

**Table 3**

| **Formulations for Compression Molded LLDPE Examples** | | | | | | | |
|---|---|---|---|---|---|---|---|
| **Examples:** | **1** | **2** | **3** | **4** | **5** | **Comp 6** | **7** |
| Oak Wood Flour (40) | 50 | 50 | 50 | 50 | 50 | 50 | 50 |
| Naugard B-25 | 0.1 | 0.1 | 0.1 | 0.1 | 0.1 | 0.1 | 0.1 |
| 1 | 0.5 | | | | | | |
| 2 | | 0.5 | | | | | |
| 3 | | | 0.5 | | | | |
| 4 | | | | 0.5 | | | |
| 5 | | | | | 0.5 | | |
| Comparative 6 | | | | | | 0.5 | |
| 7 | | | | | | | 0.5 |
| LLDPE Recycle | 49.4 | 49.4 | 49.4 | 49.4 | 49.4 | 49.4 | 49.4 |
| **Total** | 100 | 100 | 100 | 100 | 100 | 100 | 100 |

| **Comparative** | **A** | **B** | **C** | | | | |
|---|---|---|---|---|---|---|---|
| Oak Wood Flour (40) | 50 | 50 | 50 | | | | |
| Naugard B-25 | 0.1 | 0.1 | 0.1 | | | | |
| Comparative A | | 0.5 | | | | | |
| Comparative B | | | 0.5 | | | | |
| LLDPE Recycle | 49.9 | 49.4 | 49.4 | | | | |
| **Total** | 100 | 100 | 100 | | | | |

**Table 4**

| **Properties of Compression Molded Samples** | | | | | | | |
|---|---|---|---|---|---|---|---|
| **Examples:** | **1** | **2** | **3** | **4** | **5** | **Comp 6** | **7** |
| Flex Strength (MPa) | 22.9 | 22.8 | 21.9 | 23.1 | 22.5 | 21.5 | 22.0 |
| Flex Modulus (MPa) | 1078 | 1089 | 1049 | 1153 | 1156 | 993 | 1109 |
| Water Uptake-30 day, % | 3.8 | 3.9 | 3.9 | 3.9 | 4.3 | 4.3 | 4.2 |

| **Comparative Examples:** | **A** | **B** | **C** | | | | |
|---|---|---|---|---|---|---|---|
| Flex Strength (MPa) | 13.7 | 19.4 | 21.3 | | | | |
| Flex Modulus (MPa) | 986 | 1125 | 1121 | | | | |
| Water Uptake- 30 day, % | 6.4 | 4.3 | 4.1 | | | | |

**Table 5**

| **Formulations for Compression Molded HDPE Examples** | | | | | | | | | |
|---|---|---|---|---|---|---|---|---|---|
| **Inventive Examples:** | **8** | **9** | **10** | **11** | **12** | **13** | **14** | **15** | **16** |
| Pine Wood Flour (40) | 50 | 50 | 50 | 50 | 50 | 50 | 50 | 50 | 50 |
| Naugard B-25 | 0.1 | 0.1 | 0.1 | 0.1 | 0.1 | 0.1 | 0.1 | 0.1 | 0.1 |
| 5 | 0.5 | 1 | 2 | | | | | | |
| 6 | | | | 0.5 | 1 | 2 | | | |
| 7 | | | | | | | 0.5 | 1 | 2 |
| HDPE (Fractional Melt) | 49.4 | 48.9 | 47.9 | 49.4 | 48.9 | 47.9 | 49.4 | 48.9 | 47.9 |
| **Total** | 100 | 100 | 100 | 100 | 100 | 100 | 100 | 100 | 100 |

| **Comparative Examples:** | **D** | **E** | **F** | **G** | **H** | **I** | **J** | | |
|---|---|---|---|---|---|---|---|---|---|
| Pine Wood Flour (40) | 50 | 50 | 50 | 50 | 50 | 50 | 50 | | |
| Naugard B-25 | 0.1 | 0.1 | 0.1 | 0.1 | 0.1 | 0.1 | 0.1 | | |
| Comparative A | | 0.5 | 1 | 2 | | | | | |
| Comparative B | | | | | 0.5 | 1 | 2 | | |
| HDPE (Fractional Melt) | 49.9 | 49.4 | 48.9 | 47.9 | 49.4 | 48.9 | 47.9 | | |
| **Total** | 100 | 100 | 100 | 100 | 100 | 100 | 100 | | |

**Table 6**

| **Properties of Compression Molded HDPE Samples** | | | | | | | | | |
|---|---|---|---|---|---|---|---|---|---|
| **Inventive Examples:** | **8** | **9** | **10** | **11** | **12** | **13** | **14** | **15** | **16** |
| Flex Strength (MPa) | 41.6 | 45.1 | 44.9 | 36.6 | 39.8 | 47.9 | 37.3 | 42.0 | 45.0 |
| Flex Modulus (MPa) | 2443 | 2478 | 2373 | 2447 | 2327 | 2460 | 2677 | 2349 | 2511 |
| Water Uptake-30 day, % | 3.6 | 3.5 | 3.4 | 3.4 | 3.0 | 3.0 | 3.5 | 2.9 | 3.0 |

| **Comparative Examples:** | **D** | **E** | **F** | **G** | **H** | **I** | **J** | | |
|---|---|---|---|---|---|---|---|---|---|
| Flex Strength (MPa) | 22.4 | 35.3 | 39.7 | 43.2 | 34.2 | 33.5 | 31.4 | | |
| Flex Modulus (MPa) | 2211 | 2688 | 2260 | 2646 | 2511 | 2400 | 2079 | | |
| Water Uptake-30 day, % | 11.5 | 4.0 | 3.6 | 3.3 | 4.2 | 3.7 | 3.7 | | |

**Table 7**

| **Formulations for Extruded HDPE Examples** | | | | | | |
|---|---|---|---|---|---|---|
| **Inventive Examples:** | **17** | **18** | **19** | **20** | | |
| 4020 Wood Flour | 55 | 55 | 55 | 55 | | |
| Talc-Silverline 403 | 5 | 5 | 5 | 5 | | |
| Naugard B-25 | 0.1 | 0.1 | 0.1 | 0.1 | | |
| Example 5 | 0.5 | 1.0 | 1.5 | 2.0 | | |
| Kemamide EBS | 3 | 3 | 3 | 3 | | |
| Kemamide W-20 | 1 | 1 | 1 | 1 | | |
| HDPE B54-60 FLK (0.5) MFI) | 35.4 | 34.9 | 34.4 | 33.9 | | |
| **Total** | 100 | 100 | 100 | 100 | | |

| **Comparative Examples:** | **K** | **L** | **M** | **N** | **O** | **P** |
|---|---|---|---|---|---|---|
| 4020 Wood Flour | 55 | 55 | 55 | 55 | 55 | 55 |
| Talc-Silverline 403 | 5 | 5 | 5 | 5 | 5 | 5 |
| Naugard B-25 | 0.1 | 0.1 | 0.1 | 0.1 | 0.1 | 0.1 |
| Comparative A | | | 0.5 | 1.0 | 1.5 | 2.0 |
| Zinc Stearate | 2.0 | | | | | |
| Kemamide EBS | 2.0 | 3.0 | 3.0 | 3.0 | 3.0 | 3.0 |
| Kemamide W-20 | | 1.0 | 1.0 | 1.0 | 1.0 | 1.0 |
| HDPE B54-60 FLK (0.5) MFI) | 35.9 | 35.9 | 35.4 | 34.9 | 34.4 | 33.9 |
| **Total** | 100 | 100 | 100 | 100 | 100 | 100 |

**Table 8**

| **Properties of Extruded HDPE Examples** | | | | | | | |
|---|---|---|---|---|---|---|---|
| **Inventive Examples:** | **rpm** | **17** | **18** | **19** | **20** | | |
| Output (ft/min) | 60 | 2.24 | 2.26 | 2.25 | 2.26 | | |
| Flex Strength (MPa) | 60 | 30.1 | 33.5 | 38.9 | 45.9 | | |
| Flex Modulus (MPa) | 60 | 2954 | 3519 | 3632 | 3958 | | |
| Specific Gravity | 60 | 1.16 | 1.17 | 1.16 | 1.17 | | |
| 24 hr Water Uptake (%) | 60 | 8.0 | 6.9 | 5.6 | 5.2 | | |

| **Comparative Examples:** | **rpm** | **K** | **L** | **M** | **N** | **O** | **P** |
|---|---|---|---|---|---|---|---|
| Output (ft/min) | 60 | 2.86 | 2.28 | 2.25 | 2.25 | 2.22 | 2.36 |
| Flex Strength (MPa) | 60 | 27.4 | 30.5 | 29.0 | 30.1 | 31.2 | 30.6 |
| Flex Modulus (MPa) | 60 | 3031 | 3299 | 3076 | 3214 | 3288 | 3422 |
| Specific Gravity | 60 | 1.12 | 1.17 | 1.15 | 1.16 | 1.18 | 1.15 |
| 24 hr Water Uptake (%) | 60 | 9.6 | 8.3 | 8.5 | 7.9 | 6.8 | 7.6 |

It can readily be seen that functionalized polyolefin coupling agents of the present invention provide superior mechanical properties compared to previously known coupling agent with similar melt flow rates.

In view of the many changes and modifications that can be made without departing from principles underlying the invention, reference should be made to the appended claims for an understanding of the scope of the protection to be afforded the invention.

## Claims

1. A coupling agent for wetting a natural fiber comprising:
a polyolefin resin combined with 1.6 to 4.0 weight percent maleic anhydride, said coupling agent having less than 1,500 ppm of free maleic anhydride;
wherein said coupling agent has a melt flow index at 190°C and 2.16 kg of 0.1 to 500 (g/10 min); and
wherein said coupling agent has a yellowness index of 20 to 70.

2. The coupling agent of claim 1 wherein:
said maleic anhydride is 1.6 to 3.0 weight percent of said coupling agent, said coupling agent has less than 600 ppm of free maleic anhydride;
wherein said coupling agent has a melt flow index at 190°C and 2.16 kg of 0.5 to 100 (g/10 min); and
wherein said coupling agent has a yellowness index of 20 to 55.

3. The coupling agent of claim 2 wherein:
said maleic anhydride is 2.0 to 3.0 weight percent of said coupling agent, said coupling agent has less than 200 ppm of free maleic anhydride;
wherein said coupling agent has a melt flow index at 190°C and 2.16 kg of 2 to 50 (g/10 min); and
wherein said coupling agent has a yellowness index of 20 to 40.

4. The coupling agent of claim 1 wherein said polyolefin is a polyethylene.

5. The coupling agent of claim 4 wherein said polyethylene includes a member selected from the group consisting of high-density polyethylene, low-density polyethylene, linear low-density polyethylene, copolymers with other alpha olefins, and combinations thereof.

6. The coupling agent of claim 5 wherein said polyethylene is High-density polyethylene homo- and copolymers.

7. A cellulosic composite comprising:
10 to 90 weight percent cellulosic fiber;
a first polyolefin resin having a melt flow index at 190°C and 2.16 kg of 0.1 to 100 (g/10 min);
0.1 to 10 weight percent of a coupling agent, said coupling agent comprises
a second polyolefin resin having a melt flow index at 190°C and 2.16 kg of 0.1 to 500 (g/10 min) combined with 1.6 to 4.0 weight percent maleic anhydride, said coupling agent having less than 1,500 ppm of free maleic anhydride; and
wherein said composition has a yellowness index of 20 to 70.

8. The cellulosic composite of claim 7 wherein said first polyolefin resin is a polyethylene being a member selected from the group consisting of high-density polyethylene, low-density polyethylene, linear low-density polyethylene copolymers with other alpha olefins, and combinations thereof

9. The cellulosic composite of claim 7 wherein said maleic anhydride is grafted to polyethylene, said polyethylene is a member selected from the group consisting of high-density polyethylene, low-density polyethylene, linear low-density polyethylene, copolymers with other alpha olefins, and combinations thereof

10. The cellulosic composite of claim 7 wherein said first polyolefin resin has a melt flow index at 190°C and 2.16 kg of 0.3 to 20, said cellulosic fiber is 20 to 80 weight percent of said composite, and said coupling agent is 0.5 to 3 weight percent of said composite.

11. The cellulosic composite of claim 7 wherein said first polyolefin resin is HDPE homo- and copolymers having a melt flow index at 190°C and 2.16 kg of 0.3 to 5, said cellulosic fiber is 40 to 65 weight percent of said composite, and said coupling agent is 0.5 to 2 weight percent of said composite.

12. The composite material of claim 7 wherein the natural fiber is selected from the group consisting of wood fiber, wood flour, and combinations thereof.

## Patentansprüche

1. Ein Kopplungsmittel zum Benetzen einer natürlichen Faser enthaltend:
ein Polyolefinharz kombiniert mit 1,6 bis 4,0 Gewichtsprozent Maleinsäureanhydrid, besagtes Kopplungsmittel weniger als 1.500 ppm freies Maleinsäureanhydrid aufweisend; worin besagtes Kopplungsmittel bei 190°C und 2,16 kg einen Schmelzindex von 0,1 bis 500 (g/10 min) hat; und
worin besagtes Kopplungsmittel einen Gelbwert von 20 bis 70 hat.

2. Das Kopplungsmittel des Anspruchs 1, worin:
besagtes Maleinsäureanhydrid 1,6 bis 3,0 Gewichtsprozent besagten Kopplungsmittels beträgt, besagtes Kopplungsmittel weniger als 600 ppm freies Maleinsäureanhydrid aufweist;
worin besagtes Kopplungsmittel bei 190°C und 2,16 kg einen Schmelzindex von 0,5 bis 100 (g/10 min) hat; und
worin besagtes Kopplungsmittel einen Gelbwert von 20 bis 55 hat.

3. Das Kopplungsmittel des Anspruchs 2, worin:
besagtes Maleinsäureanhydrid 2,0 bis 3,0 Gewichtsprozent besagten Kopplungsmittels beträgt, besagtes Kopplungsmittel weniger als 200 ppm freies Maleinsäureanhydrid aufweist;
worin besagtes Kopplungsmittel bei 190°C und 2,16 kg einen Schmelzindex von 2 bis 50 (g/10 min) hat; und
worin besagtes Kopplungsmittel einen Gelbwert von 20 bis 40 hat.

4. Das Kopplungsmittel des Anspruchs 1, worin besagtes Polyolefin ein Polyethylen ist.

5. Das Kopplungsmittel des Anspruchs 4, worin besagtes Polyethylen einen Vertreter ausgewählt aus der aus Polyethylen hoher Dichte, Polyethylen niedriger Dichte, linearem Polyethylen niedriger Dichte, Copolymeren mit anderen alpha-Olefinen und Kombinationen davon bestehenden Gruppe umfasst.

6. Das Kopplungsmittel des Anspruchs 5, worin besagtes Polyethylen Homo- und Copolymere Polyethylens hoher Dichte sind.

7. Ein Cellulosegemisch enthaltend:
10 bis 90 Gewichtsprozent Cellulosefaser;
ein erstes Polyolefinharz mit einem Schmelzindex von 0,1 bis 100 (g/10 min) bei 190°C und 2,16 kg;
0,1 bis 10 Gewichtsprozent eines Kopplungsmittels, besagtes Kopplungsmittel enthält
ein zweites Polyolefinharz mit einem Schmelzindex von 0,1 bis 500 (g/10 min) bei 190°C und 2,16 kg kombiniert mit 1,6 bis zu 4,0 Gewichtsprozent Maleinsäureanhydrid, besagtes Kopplungsmittel weniger als 1.500 ppm freies Maleinsäureanhydrid aufweisend; und
worin besagte Zusammensetzung einen Gelbwert von 20 bis 70 hat.

8. Das Cellulosegemisch des Anspruchs 7, worin besagtes erstes Polyolefinharz ein Polyethylen ist, das ein aus der aus Polyethylen hoher Dichte, Polyethylen niedriger Dichte, linearem Polyethylen niedriger Dichte, Copolymeren mit anderen alpha-Olefinen und Kombinationen davon bestehenden Gruppe ausgewählter Vertreter ist.

9. Das Cellulosegemisch des Anspruchs 7, worin besagtes Maleinsäureanhydrid an Polyethylen gepfropft ist, besagtes Polyethylen ein aus der aus Polyethylen hoher Dichte, Polyethylen niedriger Dichte, linearem Polyethylen niedriger Dichte, Copolymeren mit anderen alpha-Olefinen und Kombinationen davon bestehenden Gruppe ausgewählter Vertreter ist.

10. Das Cellulosegemisch des Anspruchs 7, worin besagtes erstes Polyolefinharz bei 190°C und 2,16 kg einen Schmelzindex von 0,3 bis 20 hat, besagte Cellulosefaser 20 bis 80 Gewichtsprozent besagten Gemisches beträgt und besagtes Kopplungsmittel 0,5 bis 3 Gewichtsprozent besagten Gemisches beträgt.

11. Das Cellulosegemisch des Anspruchs 7, worin besagtes erstes Polyolefinharz HDPE-Homo- und Copolymere mit einem Schmelzindex von 0,3 bis 5 bei 190°C und 2,16 kg sind, besagte Cellulosefaser 40 bis 65 Gewichtsprozent besagten Gemisches beträgt und besagtes Kopplungsmittel 0,5 bis 2 Gewichtsprozent besagten Gemisches beträgt.

12. Das Verbundmaterial des Anspruchs 7, worin die natürliche Faser ausgewählt ist aus der aus Holzfaser, Holzmehl und Kombinationen davon bestehenden Gruppe.

## Revendications

1. Agent de couplage pour le mouillage d'une fibre naturelle comprenant :
une résine de polyoléfine combinée avec 1,6 à 4,0 pour cent en poids d'anhydride maléique, ledit agent de couplage ayant moins de 1 500 ppm d'anhydride maléique libre ;
ledit agent de couplage ayant un indice de fusion à 190°C et 2,16 kg de 0,1 à 500 (g/10 min) ; et
ledit agent de couplage ayant un indice de jaunissement de 20 à 70.

2. Agent de couplage selon la revendication 1, dans lequel :
ledit anhydride maléique représente de 1,6 à 3,0 pour cent en poids dudit agent de couplage, ledit agent de couplage ayant moins de 600 ppm d'anhydride maléique libre ;
ledit agent de couplage ayant un indice de fusion à 190°C et 2,16 kg de 0,5 à 100 (g/10 min) ; et
ledit agent de couplage ayant un indice de jaunissement de 20 à 55.

3. Agent de couplage selon la revendication 2, dans lequel :
ledit anhydride maléique représente de 2,0 à 3,0 pour cent en poids dudit agent de couplage, ledit agent de couplage ayant moins de 200 ppm d'anhydride maléique libre ;
ledit agent de couplage ayant un indice de fusion à 190°C et 2,16 kg de 2 à 50 (g/10 min) ; et
ledit agent de couplage ayant un indice de jaunissement de 20 à 40.

4. Agent de couplage selon la revendication 1, dans lequel ladite polyoléfine est un polyéthylène.

5. Agent de couplage selon la revendication 4, dans lequel ledit polyéthylène comprend un élément choisi dans le groupe constitué par le polyéthylène haute densité, le polyéthylène basse densité, le polyéthylène basse densité linéaire, les copolymères avec d'autres alpha-oléfines et leurs combinaisons.

6. Agent de couplage selon la revendication 5, dans lequel ledit polyéthylène est un homopolymère et des copolymères de polyéthylène haute densité.

7. Composite cellulosique comprenant :
10 à 90 pour cent en poids de fibre cellulosique ;
une première résine de polyoléfine ayant un indice de fusion à 190°C et 2,16 kg de 0,1 à 100 (g/10 min) ;
0,1 à 10 pour cent en poids d'un agent de couplage, ledit agent de couplage comprenant
une seconde résine de polyoléfine ayant un indice de fusion à 190°C et 2,16 kg de 0,1 à 500 (g/10 min) combinée avec 1,6 à 4,0 pour cent en poids d'anhydride maléique, ledit agent de couplage ayant moins de 1 500 ppm d'anhydride maléique libre ; et
ladite composition ayant un indice de jaunissement de 20 à 70.

8. Composite cellulosique selon la revendication 7, dans lequel ladite première résine de polyoléfine est un polyéthylène qui est un élément choisi dans le groupe constitué par le polyéthylène haute densité, le polyéthylène basse densité, le polyéthylène basse densité linéaire, les copolymères avec d'autres alpha-oléfines et leurs combinaisons.

9. Composite cellulosique selon la revendication 7, dans lequel ledit anhydride maléique est greffé sur le polyéthylène, ledit polyéthylène étant un élément choisi dans le groupe constitué par le polyéthylène haute densité, le polyéthylène basse densité, le polyéthylène basse densité linéaire, les copolymères avec d'autres alpha-oléfines et leurs combinaisons.

10. Composite cellulosique selon la revendication 7, dans lequel ladite première résine de polyoléfine a un indice de fusion à 190°C et 2,16 kg de 0,3 à 20, ladite fibre cellulosique représentant 20 à 80 pour cent en poids dudit composite, et ledit agent de couplage représentant 0,5 à 3 pour cent en poids dudit composite.

11. Composite cellulosique selon la revendication 7, dans lequel ladite première résine de polyoléfine est un homopolymère et des copolymères de HDPE ayant un indice de fusion à 190°C et 2,16 kg de 0,3 à 5, ladite fibre cellulosique représentant 40 à 65 pour cent en poids dudit composite, et ledit agent de couplage représentant 0,5 à 2 pour cent en poids dudit composite.

12. Matériau composite selon la revendication 7, dans lequel la fibre naturelle est choisie dans le groupe constitué par la fibre de bois, la farine de bois et leurs combinaisons.
